# EUROPEAN PATENT APPLICATION

(11) **EP 2 052 951 A1**
(43) Date of publication of application: **29.04.2009**
(21) Application number: 08380299.1
(22) Date of filing: 21.10.2008
(51) Int. Cl.: B62D 25/10, B60R 21/34

(54) **Device for protecting pedestrians**

(30) Priority: 24.10.2007 ES 200702163 U
(71) Applicant: Seat, S.A., 08760 Martorell, Barcelona (ES)
(72) Inventor: Cervera Villora, Carlos, 08760 Martorell - Barcelona (ES)
(74) Representative: Carvajal y Urquijo, Isabel

(57) **Abstract**

The invention relates to a device for protecting pedestrians comprising at least:
an engine bonnet (1) in turn comprising a theoretical break line (2), through which said engine bonnet (1) will be deformed, such that the direct impact of the pedestrian (9) against rigid or sharp elements is prevented;
and a modified hinge (3), allowing the correct opening of the engine bonnet in its full range, in turn comprising a guide (4) such that it allows the movement of the engine bonnet (1) in direction X when a pyrotechnic element is actuated (5).

## Description

### Field of the Invention

The object of the present utility model is a device for protecting pedestrians, and more specifically, a pyrotechnic element allowing the deformation of the bonnet to efficiently deaden the possible impact of the head of a pedestrian against the bonnet.

### Background of the Invention

Passive safety systems for protecting pedestrians are currently based on complicated pyrotechnic or hydraulic modules allowing the vertical movement of the engine bonnet, thus preventing the impact of the pedestrian against the windscreen of the vehicle and a considerable deadening of the impact.

Current modules for protecting pedestrians have several drawbacks. In the first place the lifting mechanisms allowing the movement of the bonnet in a determined range are very expensive and complicated, entailing problems of integration in vehicles not in the upper range or with little space to be installed in the space for the engine. This condition also considerably limits very relevant factors as the design of the bonnet may be, since the volume occupied by the protection systems has to be taken into account. Another problem that said systems can entail is the effectiveness thereof, since the movement distance of these systems is quite limited and at times they are not rapid enough, above all in non-pyrotechnic systems, to be completely effective. Likewise, the systems are single-use, and must be replaced once they have been used.

### Description of the Invention.

To palliate or where appropriate eliminate the problems mentioned above, the device for protecting pedestrians, object of the present utility model, is described.

The device for protecting pedestrians obtains an efficient and rapid protection, with a greater level of movement than current systems and a greater simplicity. Due to the fact that the device is intended to be used in cases of impacts against pedestrians, which will inevitably cause a deformation in the bonnet of the automobile, the proposed device is necessarily single-use. Even taking this drawback, generalized for all devices for protecting pedestrians, into account, the proposed device achieves a greater volume of deformation than current devices, which translates into greater safety for pedestrians. The proposed device is based on an assembly formed by pyrotechnic elements, located in the hinges of the engine bonnet which, when an impact is detected by means of a series of sensors, which can correspond to the parking aid sensors of vehicles, actuate said pyrotechnic element, moving the hinges through guides in the direction of the X axis. The engine bonnet must be designed such that it has a weakening line, or theoretical break line, a certain distance from the hinges. By virtue of this weakening line the bonnet is allowed to be deformed in that position as the hinges advance along the X axis. To improve said deformation, the anchorage of the bonnet in its front-end area must be rigid enough to withstand the movement stress of the hinges. The final effect of the device after an impact is a rear part of the bonnet moved forwards along the X axis, a central part lifted a certain distance, enough so that the extra volume created between the engine bonnet and the elements of the engine or the front windscreen allow an efficient deadening of the impact, and a solidly anchored front-end area preventing the device from failing. Visually the bonnet will be left totally deformed in its central and rear area, therefore it will be necessary to replace it, as well as the rest of the elements the device includes, once used.

The main advantage that the proposed device has is the increase in volume between the bonnet and the elements of the engine in the event of the impact of a pedestrian, a factor which translate into greater safety for same. Another outstanding advantage is the simplicity of the device, since elements already incorporated in the vehicle and requiring only slight modifications are used, but in no case does it require the incorporation of complex lifting devices. This factor allows an important freedom of design in comparison with current devices for protecting pedestrians and, possibly greater saving in the design and replacement of the elements of the device.

### Brief Description of the Drawings

A series of drawings are very briefly described below aiding to better understand the invention and expressly related to an embodiment of said invention which is presented as a non-limiting embodiment thereof.

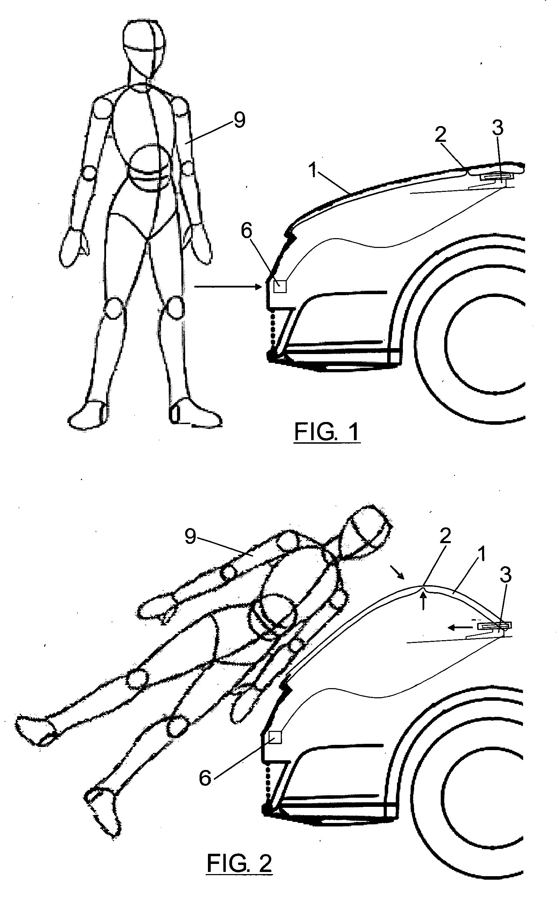

Figure 1 shows a section view of the system in deactuated position.

Figure 2 shows a section view of the system in actuated position.

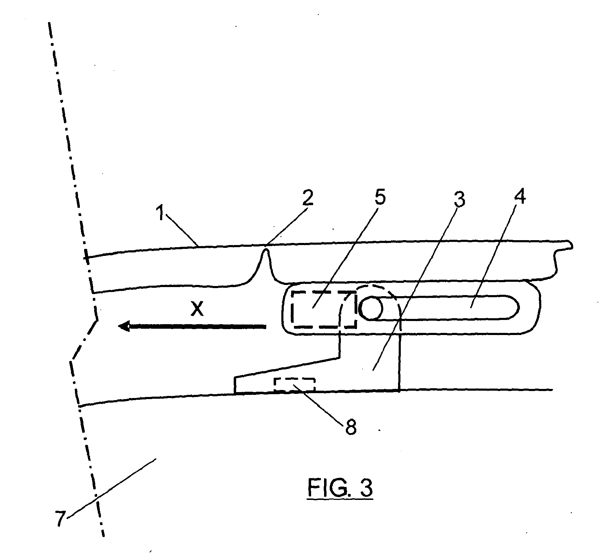

Figure 3 shows a detail of the modified bonnet hinge for the use of the system for protecting pedestrians.

### Preferred Embodiment of the Invention

As can be seen in the attached figures, the device for protecting pedestrians comprises at least:
an engine bonnet (1) in turn comprising a theoretical break line (2), through which it will be further deformed to prevent the direct impact of the pedestrian (9) against rigid or sharp elements;
a modified hinge (3), allowing the correct opening of the engine bonnet in its full range, comprising a guide (4) such that it allows the movement in direction X, by virtue of the incorporation of a pyrotechnic element (5), which is actuated when a determined pressure parameter is detected through a series of sensors (6) arranged on a structural element of the vehicle, commonly the bumper of the vehicle.

The hinge (3) consists of two different parts; the upper part contains the guide (4), allowing the movement in X of the assembly of the engine bonnet, and the part inferior allows the anchorage of the hinge (3) to the undercarriage of the vehicle (7) by means of various types of joining elements (8). This joining element (8) must be rigid enough to ensure that the body of the hinge (3) will stay in its original place once the pyrotechnic element (5) is activated and the guide (4) is moved. The operation of the system is the following:

When the presence of the pedestrian (9) is detected by impact against the front of the vehicle, the sensors (6) send a signal to the control box responsible for managing the passive safety systems, which will actuate the pyrotechnic (5) installed in the hinge (3). When the pyrotechnic is actuated the upper part of the hinge (3) moves a certain distance in x. Due to the distance moved the theoretical break line (2) tends to lift the engine bonnet (1) through that point, which gives rises to the increase in volume between the engine bonnet and the undercarriage of the vehicle (7).

## Claims

1. A device for protecting pedestrians, **characterized in that** it comprises at least:
an engine bonnet (1) in turn comprising a theoretical break line (2), through which said engine bonnet (1) will be deformed such that the direct impact of the pedestrian (9) against rigid or sharp elements is prevented;
and a modified hinge (3), allowing the correct opening of the engine bonnet in its full range, in turn comprising a guide (4) such that it allows the movement of the engine bonnet (1) in direction X when a pyrotechnic element (5) is actuated.

2. The device for protecting pedestrians according to claim 1, **characterized in that** the pyrotechnic element (5) is actuated when a determined pressure parameter is detected through a plurality of sensors (6) arranged on a structural element of the vehicle.

3. The device for protecting pedestrians according to claim 1, **characterized in that** the structural element of the vehicle is the bumper.

4. The device for protecting pedestrians according to claim 1, **characterized in that** the hinge (3) comprises at least two different parts, wherein the upper part contains the guide (4), allowing the movement in X of the assembly of the engine bonnet (1), and wherein the part inferior allows the anchorage of the hinge (3) to the undercarriage of the vehicle (7) by means of a plurality of joining elements (8).

5. The device for protecting pedestrians according to the previous claims, **characterized in that** the joining elements (8) are rigid enough to ensure that the body of the hinge (3) will stay in its original place once the pyrotechnic element (5) is actuated and the guide (4) is moved.

6. The device for protecting pedestrians according to the previous claims, **characterized in that** when the presence of the pedestrian (9) is detected by impact against the front of the vehicle, the sensors (6) send a signal to the control box responsible for managing the passive safety systems, which will activate the pyrotechnic (5) installed in the hinge (3); and wherein when the pyrotechnic (5) is actuated the upper part of the hinge (3) moves a certain distance in the X axis; and wherein due to the distance moved, the theoretical break line (2) tends to lift the engine bonnet (1) through that point, which gives rise to an increase in volume between the engine bonnet (1) and the undercarriage of the vehicle (7).
